# EUROPEAN PATENT SPECIFICATION

(11) **EP 1 983 031 B1**
(45) Date of publication and mention of the grant of the patent: **07.05.2025**
(21) Application number: 08250905.0
(22) Date of filing: 17.03.2008
(51) Int. Cl.: C09C 1/00

(54) **A surface treated flake**
Oberflächenbehandelte Plättchen
Copeau traité en surface

(30) Priority: 21.03.2007 US 919204 P
(43) Date of publication of application: 22.10.2008
(73) Proprietor: Viavi Solutions Inc., Chandler, AZ 85286 (US)
(72) Inventor: Raksha, Vladimir P., Santa Rosa, CA 95403 (US); Kohlmann, Paul T., Windsor, CA 95492 (US)
(74) Representative: Murgitroyd & Company

(56) References cited:
- US-A- 3 402 066
- US-A1- 2005 148 685
- US-A1- 2006 014 017
- US-B1- 6 236 510
- US-B1- 6 902 807

## Description

### TECHNICAL FIELD

The present invention relates to optical flakes and methods of manufacturing thereof. More particularly, the invention relates to self-aligning, asymmetrical, highly-reflective flakes, for use in a carrier medium.

### BACKGROUND OF THE INVENTION

Color shifting inks, and other coating compositions containing reflective pigments in a carrier, are used for security and decorative purposes.

U.S. Patent No. 7,160,375 issued January 9, 2007, in the name of Yamamoto, referred to hereafter as '375, teaches an aqueous composition including glittering pigments, such as metal coated glass particles, coated with a water repellent material for improving glittering properties of the composition. The coating on the particles is produced by mixing uncoated particles with a solution of the water repellent material, shaking the mixture for 30 minutes, and subsequently drying the mixture. This process yields particles enveloped in the water-repellent coating.

Disadvantageously, images made using pigments disclosed in '375 are sensitive to mechanical wear, because bonds between hydrophobic surfaces of the pigments and the aqueous carrier are weak, and the pigment particles easily shed from the surface of the carrier.
US2006/014017A and US3,402,066 are also useful in understanding the present invention. US 2006/014017 A1 discloses a pigment which has a reflective layer surrounded by a sealant, consisting of a hydrophobic or a hydrophilic material. US 3 402 066 A discloses an uncoated asymmetrical reflective flake comprising a metal reflector layer, wherein the metal reflector layer has a concave side and a convex side opposite to the concave side, for reflecting light.

An object of the present invention "is to overcome shortcomings of the prior art and provide reflective flakes with improved reflectivity for use in a carrier medium, as well as a cost effective method of manufacturing such flakes.

### SUMMARY OF THE INVENTION

Accordingly, the present invention relates to an asymmetrical reflective flake as defined in claim 1.

Another aspect of the present invention relates to a method of manufacturing a plurality of flakes as defined in claim 9.

Another aspect of the present invention provides a coating as defined in claim 8.
The present invention presents a flake having an asymmetrical feature. The flake has a first side and a second side and includes a metal reflector layer for reflecting light, wherein a first surface of the metal reflector layer is a concave surface, and a second surface of the metal reflector layer, opposite to the first surface, is a convex surface, for reflecting light, and a coating of a carrier-repellent material supported by the reflector layer, wherein the carrier-repellent material is coated on the first side and is absent from the second side, for orienting the flake in a carrier so that the flake rests upon the carrier having the first side at least partially out of the carrier and the second side immersed in the carrier. The flake can have an asymmetrical feature, such as a color shifting coating on a single surface of the reflector layer, comprising a dielectric layer on the reflector layer, and a coating of an absorber material on the dielectric layer, for providing a color shifting effect on the first side of the flake; wherein another surface of the reflector layer is absent at least the absorber material, and wherein the second side of the flake is absent the color shifting effect. Alternatively, the asymmetrical feature is a relief symbol on a single surface of tire reflector layer. Alternatively, the asymmetrical feature is an asymmetrical profile of the metal reflector layer, wherein one surface of the reflector layer is a concave surface having depression of at least 20 nm, and another surface of the reflector layer is a convex surface, for affecting direction of reflected light.

### BRIEF DESCRIPTION OF THE DRAWINGS

The invention will be described in greater detail with reference to the accompanying drawings which represent preferred embodiments thereof, wherein:
Figure 1 is a cross-sectional view of a microsculptured reflector flake in a carrier;
Figure 2 is a cross-sectional view of a flake having a concave shape;
Figure 3 is a perspective view of the flake shown in Fig. 2;
Figure 4 is a perspective view of a trough-shaped flake;
Figure 5 is a cross-sectional view of a segmented flake;
Figures 6 and 7 are perspective views of the segmented flake shown in Fig. 5;
Figure 8-9 are perspective views of pyramid-shaped flakes;
Figures 10a and 10b are schematic diagrams illustrating random orientation of prior-art taggant flakes in a carrier;
Figures 10c and 10d are schematic diagrams illustrating orientation of taggant flakes of the instant invention in a carrier;
Figure 11 is a cross-sectional view of a color shifting flake;
Figure 12 is a cross-sectional view of a flat flake in a carrier;
Figure 13 is a cross-sectional view of a flat flake having two additional protective layers, in a carrier;
Figure 14 is a cross section of an embossed substrate coated with multi-layered stack;
Figure 15 is a perspective view of the substrate shown in Fig. 14;
Figure 16 is a cross-sectional view of an embossed substrate coated with multi-layered stack;
Figure 17 is an experimental color travel plot illustrating a difference between two samples: one including flakes with a hydrophobic coating, and another - flakes without a hydrophobic coating;
Figure 18 is a graph of color travel plots related to a conventional pigment flake and a flake of the instant invention;
Figure 19 is a bar graph of DCA values of the two pigment flakes illustrated by Fig. 18; and
Figure 20 is a cross-sectional view of an embossed flake bearing embossed symbols or images.

### DETAILED DESCRIPTION

Dispersed in a carrier thin-film pigment flakes form special-effect coatings. According to the instant invention, a thin-film layered flake includes a metal reflector layer having a reflectivity of at least 50%, for providing high reflectivity of the coating. Also, the flake has a carrier-repellent layer of one side thereof for aligning the flake on a surface of the carrier with a predetermined side up, which is important for asymmetrical flakes.

An asymmetrical flake is a flake having an asymmetrical feature, such as a color shifting effect visible only on one side of the flake, or an image correctly reproduced on one side of the flake, whereas another side has a reverse image or no image at all. Alternatively, the asymmetrical feature is a profile of the layers forming the flake; by way of example: one surface of the reflector layer, as well as other layers, is a concave surface, and another surface of the reflector layer is a convex surface.

Conventional pigment flakes are usually symmetrical, such as the aforementioned Yamamoto's glittering pigments or flakes disclosed in U.S. Patent No. 6,236,510 issued on May 22, 2001, in the name of Bradley et al., referred to hereafter as '510. The conventional flakes orient randomly in a liquid carrier, as far as the thickness of the coating permits.

Random orientation of asymmetrical flakes in the carrier would decrease or even eliminate the benefits of making flakes asymmetrical. For example, among one-sided color-shifting flakes in a thin carrier coating, only approximately a half of the flakes would lie with a color-shifting side up. Moreover, among lens-shaped flakes in a thin carrier coating, some of the flakes would have a concave side up, and others - a convex side up, thus undesirably mutually canceling produced optical effects.

The flakes of the instant invention have a layer of a material repellent to the carrier on a single side thereof, the side designed to reflect light impinged on the coating. Coated on an object within a liquid carrier, these flakes spontaneously self-assemble to rest upon the carrier having the carrier-repellent side at least partially out of the carrier and another side immersed in the carrier.

The carrier-repellent material is a hydrophobic material for flakes used in a water-based carrier, or an oleophobic material for flakes in an oil-based carrier or in another organic carrier. Generally, the choice of the carrier-repellent material depends on the type of the carrier, so that a carrier-repellent surface is not-wettable by the carrier, that is a contact angle between the surface and the liquid carrier is greater than 90°.

The flake of the instant invention preferably has a diameter in the range of 1 micron to 1000 microns and a thickness between 40 nm and 5 microns. The thickness is substantially constant, so that variations of the thickness are not higher than 20%.

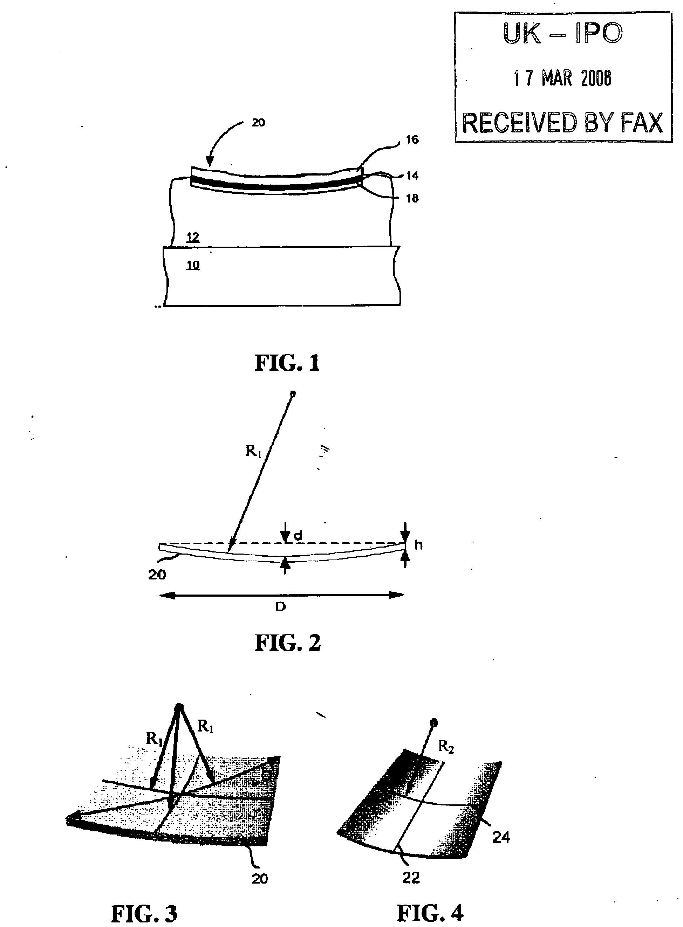

In the instant invention, a microsculptured reflector flake has a concave side and a convex side opposite thereto, wherein only the concave side is coated with a carrier repellent material. With reference to Fig. 1, an object 10 is printed with a water based ink coating 12 having microsculptured flakes dispersed therein, such as a flake 20 consisting of a reflector layer 14, a hydrophobic layer 16 supported by the reflector layer 14, and an optional protective layer 18, by way of example made of MgF₂. The layer of a hydrophobic material 16 deposited on the concave surface of the flake 20 forces it to flip in the wet ink vehicle 12 in such a fashion, that the concave surface of the flake 20 faces away from the object 10. By way of example, the hydrophobic material is scandium fluoride or WRI Patinal^{®} manufactured by Merck.

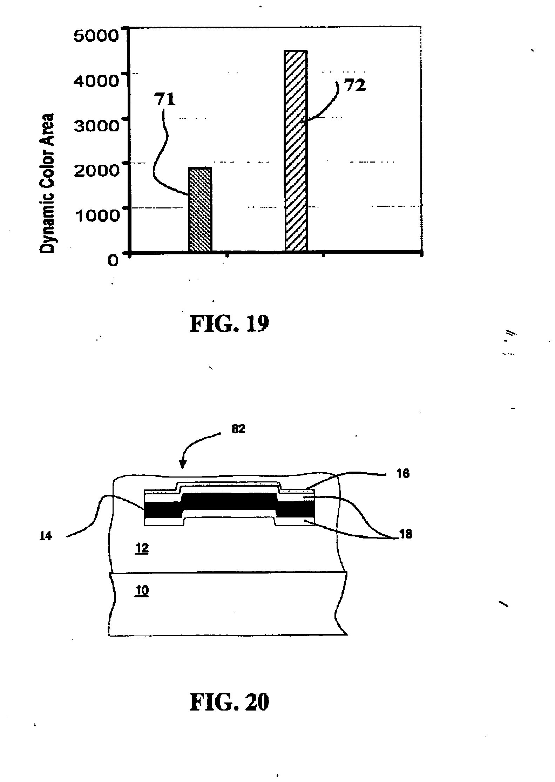

The microsculptured flake can also be embossed in a such way that it bears an image or a symbol on its surface, such an embossed flake 82 in Fig. 20.

Examples of a suitable reflective material for the reflector layer 14 include aluminum, silver, iron, tantalum, indium, rhenium, copper, silver, gold, platinum, palladium, nickel, cobalt, niobium, chromium, tin, and reflective alloys. Alternatively, the reflector layer 14 is a reflective thin-film optical stack.

Optionally, the flake 20 includes additional layers, e.g. for modifying the color of light reflected by the reflector layer 14.

With reference to Figs. 2 and 3, the flake 20 preferably has a diameter D in the range of 2-1000 microns and a thickness of the flake h in the range of 40 nm-5 microns. For the purpose of this application, a concave surface is understood as having a depression of a depth d in the range of 20 nm - 5 microns, or having a ratio *d*/*D* between 0.001 - 0.5, or having a radius of curvature R in the range of 2 microns - 6 mm. Accordingly, a convex surface is understood as having an elevation within the same ranges.

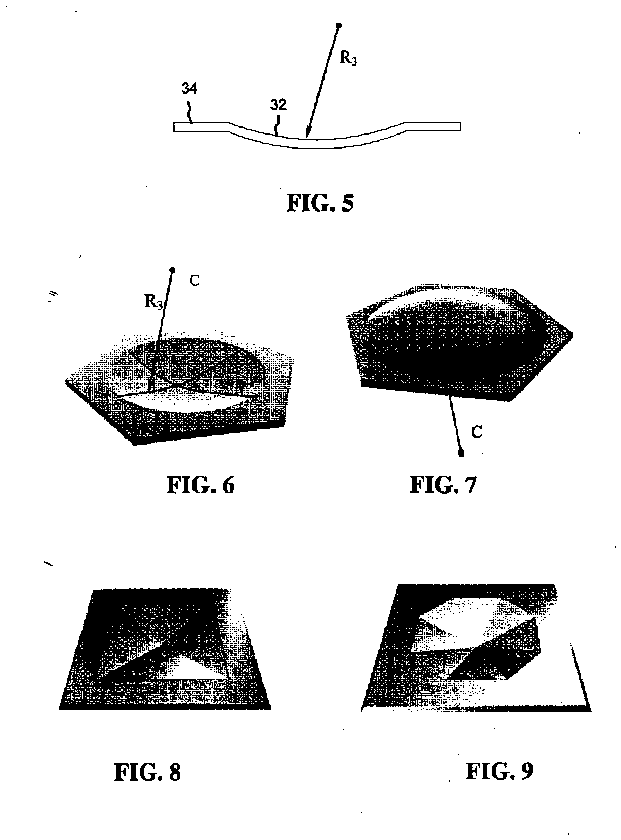

The two-dimensional shape of the flake shown in Figs. 2 and 3 is a square with sides in the range from 10 x 10 microns to 1000 x 1000 microns. Alternatively, the microsculptured flakes of the instant invention can have other than a square two-dimensional shapes, such as a hexagon shown in Fig. 6, a diamond, etc.

The concave and convex surfaces of the flakes can be shaped so as to be a portion of a spherical surface or a portion of a quasi-spherical surface, a portion of a parabolic or quasi-parabolic surface, or a trough-shaped portion of a cylindrical surface, etc. The partial spherical and quasi-spherical shaped flakes have an average radius of curvature R (see Fig. 3) in the range of 2 microns to 6mm. and variations in the radius of curvature not higher than 10%. The choice of radius R depends on the flake size and the thickness of the ink or paint coating. A trough-shaped flake, that is, a flake that conforms to a portion of a cylinder, is shown in Fig. 4; its surface is curved only along the axis 24, and not curved along the other axis 22.

The microsculptured flakes of the instant invention can be either completely curved or have a flat area adjacent to a depression or elevation. In one embodiment shown in Figs 5-7, a concave flake surface is segmented, wherein a depression 32 is adjacent to a substantially flat region 34 having an average peak-valley distance deviation of no more than 5nm. Accordingly, the opposite side of the flake is a segmented convex surface having a flat region adjacent to an elevation.

In reference to Figs. 8 and 9, the concave and convex flake surfaces can have a form of a pyramid. By way of example, Fig. 8 shows a flake having a square-based pyramid elevation surrounded by a flat adjacent region.

In one embodiment of the instant invention, the reflector flake has the convex side coated with die carrier repellent material. Such flakes self-assemble on the surface of the carrier with the convex side up thus forming a light-scattering surface.

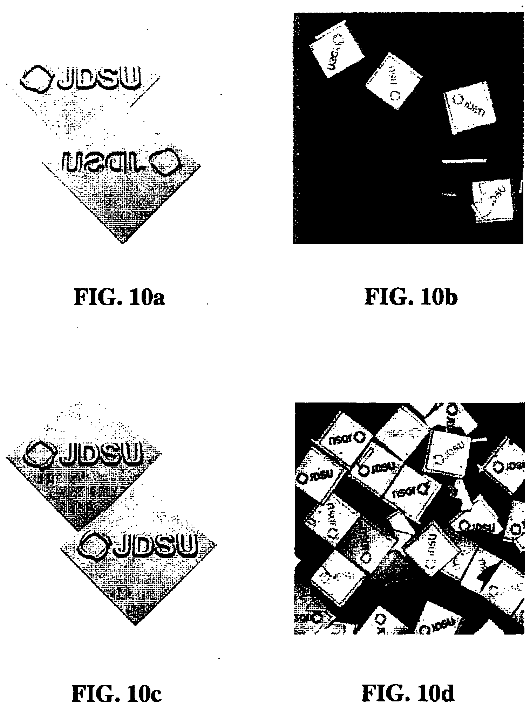

According to another embodiment of the instant invention, taggant flakes having a relief image on the surface thereof are coated with a carrier-repellent material on one side. The taggant flakes, also referred to as taggent flakes, are disclosed in U.S. Patent No. 7,241,489 issued on July 10, 2007, in the name of Argoitia et al., referred to hereafter as '489. By the way of example, square taggant flakes have the letters "JDSU" in the center thereof, as shown in Figs. 10a-d. When an object, for example a paper document, is printed with water-based ink containing such taggant flakes without a hydrophobic coating, the flakes orient randomly, as far as the thickness of the coating permits, sec Figs. 10a and 10b. As a result, the "JDSU" image is visible on one portion of the flakes, and an opposite image - on another portion of the flakes. The hydrophobic coating on one side of the taggant flakes aligns the flakes on the surface of a water-based carrier with the "JDSU" image the top surface of the flakes thus readable to the observer as shown in Figs. 10c and 10d.

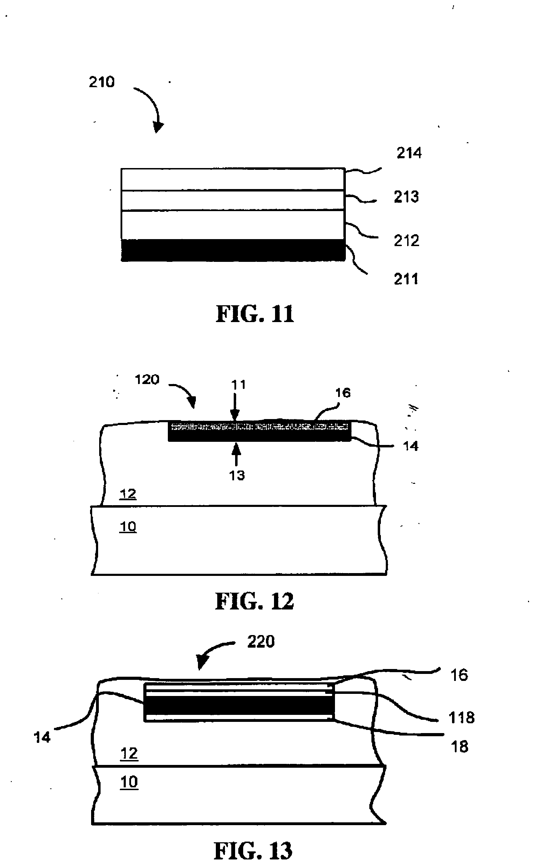

According to one embodiment of the present invention, an asymmetrical color shifting flake 210 shown in Fig. 11 includes a Fabry-Perot interference filter consisting of a reflector layer 211, a dielectric layer 212 on one side of the reflector layer 211, and an absorber layer 213 on the dielectric layer 212, for providing a color shifting effect on one side of the flake 210. Another side of the flake 210 does not provide any color shifting effect since there is no absorber layer supported by said other side of the reflector layer 211. Optionally, a protective dielectric layer (not shown) is supported by the second side of the reflector Layer 211. The flake 210 includes a carrier-repellent layer 214 supported by the absorber layer 213.

Optionally, the second side of the flakes of the instant invention is coated with a hydrophilic or oleophilic material.

In another embodiment, an asymmetrical color shifting flake has two dielectric layers, similar to the dielectric layer 212, on both sides of the reflector layer 211, and two absorber layers, similar to the absorber layer 213, on the dielectric layers, for providing a color shifting effect on both sides of the flake, and a carrier-repellent coating on a single side of the flake.

With reference to Fig. 12, an object 10 is printed with an ink coating 12, including a water-based carrier and flat flakes dispersed therein, such as a flake 120. The flake 120 consists of a reflector layer 14 and a hydrophobic layer 16 made of a hydrophobic material repellent to the water-based carrier, and supported by the reflector layer 14. The hydrophobic layer 16, deposited on a first surface 11 of the flake 120, forces the flake to self-align in the wet ink 12 so that the first surface 11 of the flake 120 faces away from the object 10 and a second flake surface 13 is immersed in the carrier.

Suitable materials for the spacer layer includes zinc sulfide (ZnS), zinc oxide (ZnO), zirconium oxide (ZrO2), titanium dioxide (TiO2), diamond-like carbon, indium oxide (In203), indium-tin-oxide ("ITO"), tantalum pentoxide (Ta2O5), ceric oxide (CeO2), yttrium oxide (Y2O3), europium oxide (Eu2O3), iron oxides such as (II)diiron(III) oxide (Fe3O4) and ferric oxide (Fc2O3), hafnium nitride. (HfN), hafnium carbide (HfC), hafnium oxide (HfO2), lanthanum oxide (La2O3), magnesium oxide (MgO). neodymium oxide (Nd2O3), praseodymium oxide (Pr6 OH), samarium oxide (Sm2O3), antimony trioxide (Sb2O3), silicon (Si), silicon monoxide (SiO), germanium (Ge), selenium trioxide (Se2O3), tin oxide (SnO2), tungsten trioxide (WO3), silicon dioxide (SiO2), aluminum oxide (A1203), metal fluorides such as magnesium fluoride (MgF2), aluminum fluoride (A1F3), cerium fluoride (CeF3), lanthanum fluoride (LaF3), sodium aluminum fluorides (e.g., Na3AIF6 or Na5A13F14), neodymium fluoride (NdF3), samarium fluoride (SMF3), barium fluoride (BaF2), calcium fluoride (CaF2), lithium fluoride (LiF), and combinations thereof, and organic monomers and polymers including dienes or alkenes such as acrylates (e.g., methacrylate), perfluoroalkenes, melanin and its derivatives, combinations thereof, and the like.

Examples of suitable absorber materials include chromium, nickel, iron, titanium, aluminum, tungsten, molybdenum, niobium, combinations, compounds or alloys thereof, such as INCONEL^{®} (Ni-Cr-Fe), metals mixed in a dielectric matrix, or other substances that are capable of acting as a uniform or selective absorber in the visible spectrum. Alternatively, the absorber can also be a dielectric material such as an iron oxide (e.g., Fe2O3), silicon monoxide (SiO), chromium oxide (Cr2O3), carton, titanium sub-oxide (TiOx), metal carbides, metal carbo-nitrides, combinations thereof, and the like. Metal absorber layers are generally deposited in a layer that is sufficiently thin so as to allow substantial transmission of light through the absorber layer.

In another embodiment shown in Fig. 13, a flat reflector flake 220 differs from the flake 120 shown in Fig. 12 by having additional layers 18 and 118 on one or both sides of the reflector layer 14. Each of the additional layers 18 and 118 may be a protective layer, and/or a colored layer, by way of example made of MgF₂ or any of chemically stable oxides, fluorides, and polymers, for modifying color of the light reflected by the reflector layer 14.

The flakes of the instant invention are manufactured by vacuum deposition of a desirable thin-film multi layered stack onto a substrate. Suitable substrates may be formed from polymeric materials, such as PET, or metals. The methods of thin film deposition are known in the art and include methods of vacuum condensation or chemical vapor deposition (CVD), spraying, dip-coating, etc.

Manufacturing of asymmetrically shaped flakes, such as described above with references to Figs. 1-10, requires a non-flat substrate, having the surface thereof embossed with a predetermined three dimensional shape, as taught in '489 and U.S. Patent Application No. 20060035080 published on February 16, 2006, in the name of Argoitia, referred to hereafter as '080. By way of example; the flakes shown in Figs. 1 - 9 are manufactured using a substrate having tranches forming a frame on the surface thereof and a concave or convex region within the frame; and the flakes shown in Figs. 10a-d are manufactured using a substrate with a relief symbol within the frame. The thin film stack including a reflector layer and a carrier-repellent layer, is molded, for example, by vacuum deposition a reflecting material and other materials onto the substrate.

In one embodiment of the instant invention, the layer of the carrier-repellent material is the last layer of the thin film stack deposited onto the substrate prior to stripping off the flakes. The method of manufacturing of the flakes includes the following steps: providing a substrate, optionally structured as described above, depositing the metal reflective material to form the metal reflector layer over the substrate, and then coating the carrier-repellent material over the metal reflector layer. Optionally, layers of other materials are deposited on the substrate before deposition of the reflector layer, such as a release layer made of a water-soluble or solvent-soluble material, and/or protective layer made of a chemically stable non-soluble material. Optionally, layers of other materials are deposited on the metal reflector layer before deposition of the carrier-repellent material, such as the dielectric layer 212 and the absorber layer 213 shown in Fig. 11.

Alternatively, the layer of the carrier-repellent material is deposited directly on the substrate, or onto a release layer. The release layer may be an organic solvent soluble or water soluble coating such as sodium chloride, cryolite, acrylic resins, cellulosic propionates, (polyvinyl pyrrolidine) polyvinyl alcohol or acetate, and the like. All other layers forming the flake, including the metal reflector layer, arc deposited over the release layer. Optionally, one or more layers of other materials are deposited on the layer of the carrier-repellent material, before deposition of the metal reflector layer, by way of example, the dielectric layer 212 and the absorber layer 213 shown in Fig. 11. The release material dissolves in the carrier during the stripping procedure.

Organic or inorganic carrier-repellent material can be deposited by vacuum evaporation or by immersion of the coated side of the substrate into a chemical bath prior to stripping flakes off the substrate. The evaporation substance Patinal^{®} by Merck is an example of a vacuum deposited organic material. Scandium fluoride is an example of an inorganic vacuum deposited hydrophobic material. DuPont Zonyl^{®} is one example of many fluorosurfactant materials for a dip coating of the substrate with deposited thin film stack. Other materials such as different perfluoropolymers are also suitable for die surface treatment of the substrate with deposited thin film stack.

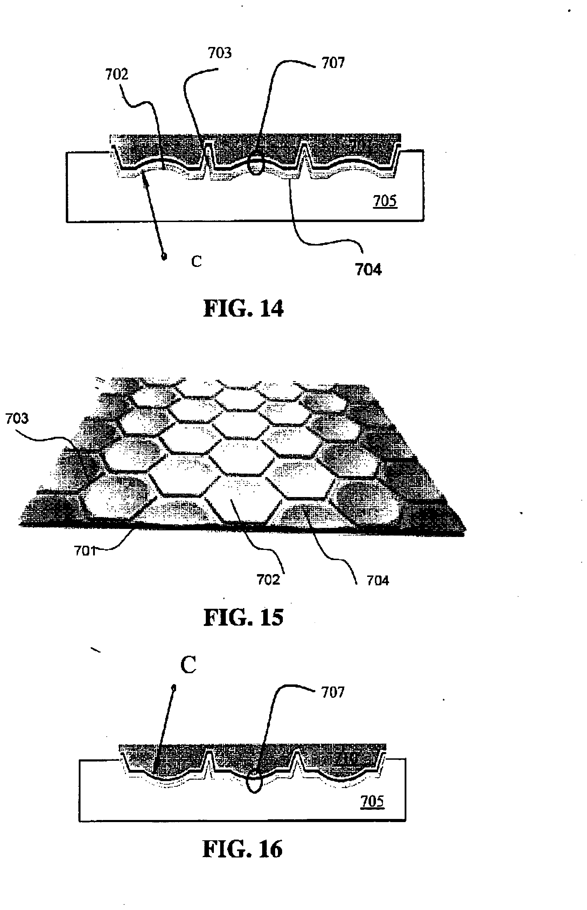

In one embodiment, the substrate with the deposited thin film stack is coated by dipping into a carrier-repellent solution as illustrated by Figs. 14 -16. In reference to Fig. 14, a concave-shaped substrate 701 has a post-coated multi-layered composition on its surface. The substrate 701 is embossed with concave shapes 702 of a radius C surrounded with flat regions 704 and separated by deep trenches 703. The substrate 701 is coated with a multi-layered stack 707 and subsequently immersed into a chemical bath with a carrier-repellent solution 705 allowing a hydrophobic material to be deposited on the concave side of the potential flakes. The deep trenches 703 allow the deposited film structure to break here as described in '080.

Fig- 15 is an image of the embossed substrate 701 prior to separating the potential flakes. The substrate 701 has multiple concave areas 702,'flat regions 704, and trenches 703 to break the coating into the potential flakes having a hexagonal two-dimensional form.

For deposition a hydrophobic material on the convex side of the potential flakes, a convex embossed substrate 710 shown in Fig. 16 is coated with the thin-film stack 707 and immersed in the bath for the carrier-repellent deposition.

By way of example, the substrates 701 and 710 are made of polyester; the thin film stack 707 is a MgF₂/Al/MgF₂ structure, and the carrier-repellent material is WRI Patinal^{®} manufactured by Merck KGaA.

Subsequently, the deposit is stripped off the substrate and separated into flakes with a single carrier-repellent side.

It has been found that coating of the flake surface with a carrier-repellent material does not affect the surface smoothness or the surface reflectance of a single flake, and improves the color performance of a coating with multiple flakes in a carrier.

The following example illustrates the color performance of an ink having asymmetrical color-shifting flakes therein.

Two different types of flakes have been prepared. For the first type, an asymmetrical layered structure MgF₂/Al/ MgF₂/Cr was deposited onto a flat polyester substrate, stripped off, and ground to the averaged size of 20 microns. The total thickness of the flake was close to one micron. One side of a resulting flake with the layer of chromium had the magenta color changing to gold with the tilt of the sample up to 60°. The opposite side of the flake had a bright silver color.

Flakes of the second type had the same structure MgF₂/Al /MgF₂/Cr/ with a thin layer of WRI Patinal^{®} on the top of the chromium layer. The WRI Patinal^{®} did not change appearance of the magenta/gold color of this particular side of the flake.

Flakes of each type were mixed with transparent Sericol Rotary Screen Ink vehicle in the quantity of 25 wt.% and printed on the paper through a 195 mesh silk screen, transported to the UV lamp and cured in the UV light until solidifying. The color travel of the prints was analyzed with a Zeiss goniospectrophotometer.

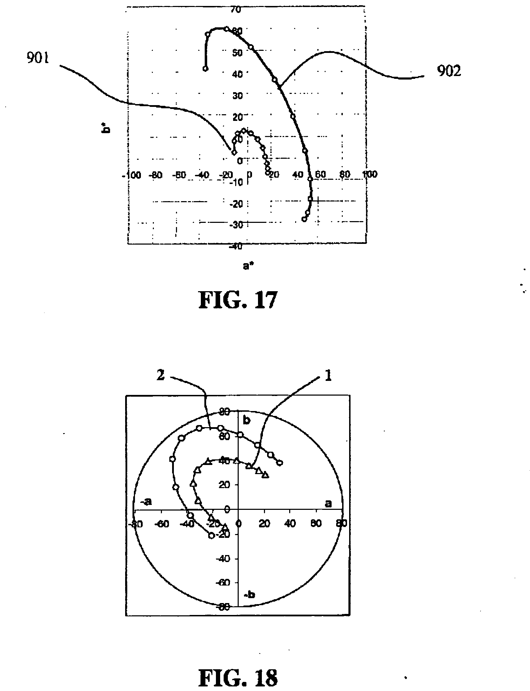

Results of the analysis are shown in a CIELab color plot in Fig. 17. The curve 901 corresponds to the sample without a hydrophobic coating containing the flakes of the first type. The color travel of this curve is very small because the aluminum side of the flakes greatly reduces chroma of the ink. This is a well known fact. The curve 902 corresponds to the sample with the hydrophobic coating where WRI Patinal^{®} was deposited on the top of the magenta/gold side of the flake. Color travel of this flake is very large, because the flakes in the carrier flipped so that the colored side appeared on the surface of the ink.

Two portions of gold-to-green color-shifting flakes were prepared as described above, except with the MgF₂ thickness being increased; one portion of (he flakes had a carrier-repellent coating, and another portion of the flakes had no carrier-repellent coating. Difference in the color travel of the color-shifting pigment flakes without and with a layer of the carrier-repellent material is shown in Fig.18, where a gold/green color travel of a conventional pigment is shown by a curve 1, and a color travel of a pigment flake having one side coated with a carrier-repellent material is shown by a curve 2. These two portions of pigment flakes were mixed with ink vehicle and printed on a paper substrate as described in above.

Dynamic Color Area (DCA) described, for example, in U.S. Patent No. 6,241,858 issued on June 5, 2001, to Phillips et al., is a measure of a dynamic "colorfulness" of a light interference pigment, hence useful in comparing color shifting performances of gonioapparent materials. Fig. 19 represents DCA values of the two pigments illustrated by Fig. 18: a bar 71 is the DCA value of the conventional pigment flake, and a bar 72 is the DCA value of the pigment flake having one side coated with a carrier-repellent material, which is about 2.3 times higher than the DCA of the conventional pigment, thus illustrating better color shifting performance of the flake coated with the carrier-repellent material in accordance to the instant invention.

Flakes of the instant invention tend to self-assemble on the surface of the carrier, to appear, at least partially, out of the carrier, and parallel to each other, reflecting incident light in the same direction and providing high reflectance of prints with metallic reflective pigments and a high chroma of prints with color-shifting pigments. Some flakes may not reach the surface of the carrier, for example being obstructed by other flakes. It is desirable to chose the concentration of the flakes in the carrier and the thickness of the coating so that at least 70% of the flakes rest upon the carrier having the first side up.

It has been proved experimentally, see Figs. 16-19, that a coating with the flakes having carrier-repelling material on one side, has the reflectivity higher than a coating with conventional symmetrical color shifting flakes such as disclosed in '510. The difference in reflectivity is due to the fact that in the carrier, the flakes of the instant invention self-align so that they rest at the surface of the carrier parallel to the substrate and to each other having the first color shifting side at least partially out of the carrier and the second, non color shifting, side immersed in the carrier and turned away from the observer. The present invention provides a mechanism for orienting flakes with a predetermined side up, or flipping, thus enabling multiple application requiring asymmetrical flakes, for example parabolic micro reflectors or microtaggants bearing a particular readable relief symbol.

In comparison to the glittering pigments disclosed in '375, the flakes of the instant invention do not shed from the carrier, since the second side of the flake is not hydrophobic.

The instant invention provides an asymmetrical orientable flake for use in a carrier. The flake has a first side and a second side and includes a metal reflector layer for reflecting light, and a coating of a carrier-repellent material supported by the reflector layer, wherein the carrier repellent material is coated on the first side and is absent from the second side, for orienting the flake in the carrier so that the flake rests upon the carrier having the first side at least partially out of the carrier and the second side immersed in the carrier. The flake has an asymmetrical feature, such as a color shifting coating on a single surface of the reflector layer, comprising a dielectric layer on the reflector layer, and a coating of an absorber material on the dielectric layer, for providing a color shifting effect on the first side of the flake; wherein another surface *o(* the reflector layer is absent at least the absorber material, and wherein the second side of the flake is absent the color shifting effect. Alternatively, the asymmetrical feature is either a relief symbol on a single surface of the reflector layer or an asymmetrical profile of the metal reflector layer, wherein one surface of the reflector layer is a concave surface having depression of at least 20 nm, and another surface of the reflector layer is a convex surface, for affecting direction of reflected light.

## Claims

1. An asymmetrical reflective flake (210) having a first side and a second side, for use in a carrier, the asymmetrical reflective flake comprising:
a metal reflector layer (211), wherein a first surface of the metal reflector layer is a concave surface, and a second surface of the metal reflector layer, opposite to the first surface, is a convex surface, for reflecting light; and
a coating of a carrier-repellent material supported by the metal reflector layer, wherein the carrier-repellent material is on a first side of the flake, and wherein a second side of the flake is absent the carrier-repellent material, the carrier-repellent material being on the first side of the flake for self-assembling the flake in the carrier so that the flake rests upon the carrier having the first side at least partially out of the carrier and the second side immersed in the carrier

2. A flake as defined in claim 1, wherein the concave surface of the metal reflector layer (211) has a depression (32) of at least 20 nm.

3. A flake as defined in claim 2, wherein the depression (32) has an average radius of curvature greater than 2 microns and less than 6mm.

4. A flake as defined in claim 2, wherein the first surface of the metal reflector layer has a flat region (34) adjacent to the depression (32).

5. A flake as defined in claim 1 further comprising a dielectric layer (212) on the first surface of the metal reflector layer (211), and a coating of an absorber material on the dielectric layer, for providing a color shifting effect on the first side of the flake (210).

6. A flake as defined in claim 5, wherein the second surface of the metal reflector layer (211) is absent at least the absorber material, whereby the second side of the flake is absent the color shifting effect.

7. A flake as defined in claim 1 having a relief symbol on the first surface of the metal reflector layer (211), and not having the relief symbol in a the second surface of the metal reflector layer.

8. A coating comprising a carrier and a plurality of flakes, each having a structure defined in claim 1, wherein at least 70% of the flakes rest upon the carrier having the first side up.

9. A method of manufacturing a plurality of flakes defined in claim 1, comprising the steps of:
(a) providing a substrate (701);
(b) depositing a first layer over the substrate, wherein the first layer is one of the metal reflector layer (211) and the coating of the carrier-repellent material;
(c) depositing a second layer over the first layer, wherein the second layer is another of the metal reflector layer and the coating of the carrier-repellent material; and,
(d) separating the plurality of flakes from the substrate;
wherein the substrate is a non-flat substrate having trenches (703) forming a frame on the surface thereof and a concave or convex region within the frame.

10. A method as defined in claim 9, wherein the substrate is a non-flat substrate having trenches (703) forming a frame on the surface thereof and a relief symbol within the frame.

11. A method as defined in claim 9, further comprising a step of depositing a dielectric layer, between steps (b) and (c).

12. A method as defined in claim 9, further comprising a step of depositing an absorber layer, after step (b) and before step (c).

13. A method as defined in claim 9, further comprising a step of depositing a release layer on the substrate before step (a).

14. A flake as defined in claim 1 wherein the carrier-repellent material is a hydrophobic material and wherein the second side of the flake is not hydrophobic.

## Patentansprüche

1. Ein asymmetrisches reflektierendes Plättchen (210), das eine erste Seite und eine zweite Seite aufweist, zur Verwendung in einem Träger, wobei das asymmetrische reflektierende Plättchen Folgendes beinhaltet:
eine Metallreflektorschicht (211), wobei eine erste Oberfläche der Metallreflektorschicht eine konkave Oberfläche ist und eine der ersten Oberfläche entgegengesetzte zweite Oberfläche der Metallreflektorschicht eine konvexe Oberfläche ist, zum Reflektieren von Licht; und
eine Beschichtung aus einem trägerabweisenden Material, das von der Metallreflektorschicht gestützt wird, wobei sich das trägerabweisende Material auf einer ersten Seite des Plättchens befindet und wobei einer zweiten Seite des Plättchens das trägerabweisende Material fehlt, wobei sich das trägerabweisende Material auf der ersten Seite des Plättchens befindet, damit sich das Plättchen in dem Träger selbst so anordnet, dass das Plättchen auf dem Träger liegt, sodass sich die erste Seite mindestens teilweise außerhalb des Trägers befindet und die zweite Seite in den Träger eingetaucht ist.

2. Plättchen gemäß Anspruch 1, wobei die konkave Oberfläche der Metallreflektorschicht (211) eine Vertiefung (32) von mindestens 20 nm aufweist.

3. Plättchen gemäß Anspruch 2, wobei die Vertiefung (32) einen durchschnittlichen Krümmungsradius von mehr als 2 Mikrometern und weniger als 6 mm aufweist.

4. Plättchen gemäß Anspruch 2, wobei die erste Oberfläche der Metallreflektorschicht einen der Vertiefung (32) benachbarten flachen Bereich (34) aufweist.

5. Plättchen gemäß Anspruch 1, das ferner eine dielektrische Schicht (212) auf der ersten Oberfläche der Metallreflektorschicht (211) und eine Beschichtung aus einem Absorbermaterial auf der dielektrischen Schicht zum Bereitstellen eines Farbänderungseffekts auf der ersten Seite des Plättchens (210) beinhaltet.

6. Plättchen gemäß Anspruch 5, wobei der zweiten Oberfläche der Metallreflektorschicht (211) mindestens das Absorbermaterial fehlt, wodurch der zweiten Seite des Plättchens der Farbänderungseffekt fehlt.

7. Plättchen gemäß Anspruch 1, das auf der ersten Oberfläche der Metallreflektorschicht (211) ein Reliefsymbol aufweist und in der zweiten Oberfläche der Metallreflektorschicht das Reliefsymbol nicht aufweist.

8. Eine Beschichtung, die einen Träger und eine Vielzahl von Plättchen beinhaltet, welche jeweils eine Struktur gemäß Anspruch 1 aufweisen, wobei mindestens 70 % der Plättchen mit der ersten Seite nach oben auf dem Träger liegen.

9. Ein Verfahren zum Herstellen einer Vielzahl von Plättchen gemäß Anspruch 1, das die folgenden Schritte beinhaltet:
(a) Bereitstellen eines Substrats (701);
(b) Ablagern einer ersten Schicht auf dem Substrat, wobei die erste Schicht eine von der Metallreflektorschicht (211) und der Beschichtung aus dem trägerabweisenden Material ist;
(c) Ablagern einer zweiten Schicht auf der ersten Schicht, wobei die zweite Schicht eine andere von der Metallreflektorschicht und der Beschichtung aus dem trägerabweisenden Material ist; und
(d) Separieren der Vielzahl von Plättchen von dem Substrat;
wobei das Substrat ein nichtflaches Substrat ist, das Gräben (703), die einen Rahmen auf dessen Oberfläche bilden, und einen konkaven oder konvexen Bereich innerhalb des Rahmens aufweist.

10. Verfahren gemäß Anspruch 9, wobei das Substrat ein nichtflaches Substrat ist, das Gräben (703), die einen Rahmen auf dessen Oberfläche bilden, und ein Reliefsymbol innerhalb des Rahmens aufweist.

11. Verfahren gemäß Anspruch 9, das ferner zwischen den Schritten (b) und (c) einen Schritt des Ablagerns einer dielektrischen Schicht beinhaltet.

12. Verfahren gemäß Anspruch 9, das ferner nach Schritt (b) und vor Schritt (c) einen Schritt des Ablagerns einer Absorberschicht beinhaltet.

13. Verfahren gemäß Anspruch 9, das ferner vor Schritt (a) einen Schritt des Ablagerns einer Trennschicht auf dem Substrat beinhaltet.

14. Plättchen gemäß Anspruch 1, wobei das trägerabweisende Material ein hydrophobes Material ist und wobei die zweite Seite des Plättchens nicht hydrophob ist.

## Revendications

1. Une paillette réfléchissante asymétrique (210) présentant un premier côté et un deuxième côté, destinée à être utilisée dans un vecteur, la paillette réfléchissante asymétrique comprenant :
une couche de réflecteur métallique (211), où une première surface de la couche de réflecteur métallique est une surface concave, et une deuxième surface de la couche de réflecteur métallique, à l'opposé de la première surface, est une surface convexe, pour réfléchir de la lumière ; et
un revêtement en un matériau repoussant le vecteur, supporté par la couche de réflecteur métallique, le matériau repoussant le vecteur étant sur un premier côté de la paillette, et un deuxième côté de la paillette étant dépourvu du matériau repoussant le vecteur, le matériau repoussant le vecteur étant sur le premier côté de la paillette pour que la paillette s'autoassemble dans le vecteur de façon que la paillette repose sur le vecteur en présentant le premier côté au moins en partie hors du vecteur et le deuxième côté immergé dans le vecteur.

2. Une paillette telle que définie dans la revendication 1, où la surface concave de la couche de réflecteur métallique (211) présente un creux (32) d'au moins 20 nm.

3. Une paillette telle que définie dans la revendication 2, où le creux (32) présente un rayon de courbure moyen supérieur à 2 micromètres et inférieur à 6 mm.

4. Une paillette telle que définie dans la revendication 2, où la première surface de la couche de réflecteur métallique présente une région plate (34) adjacente au creux (32).

5. Une paillette telle que définie dans la revendication 1 comprenant en outre une couche de diélectrique (212) sur la première surface de la couche de réflecteur métallique (211), et un revêtement en un matériau absorbeur sur la couche de diélectrique, pour fournir un effet de variation de couleur sur le premier côté de la paillette (210).

6. Une paillette telle que définie dans la revendication 5, où la deuxième surface de la couche de réflecteur métallique (211) est dépourvue d'au moins le matériau absorbeur, le deuxième côté de la paillette étant ainsi dépourvu de l'effet de variation de couleur.

7. Une paillette telle que définie dans la revendication 1 présentant un symbole en relief sur la première surface de la couche de réflecteur métallique (211), et ne présentant pas le symbole en relief dans la deuxième surface de la couche de réflecteur métallique.

8. Un revêtement comprenant un vecteur et une pluralité de paillettes, chacune présentant une structure définie dans la revendication 1, où au moins 70 % des paillettes reposent sur le vecteur en présentant le premier côté vers le haut.

9. Un procédé de fabrication d'une pluralité de paillettes définies dans la revendication 1, comprenant les étapes consistant :
(a) à fournir un substrat (701) ;
(b) à déposer une première couche par-dessus le substrat, la première couche étant une couche parmi la couche de réflecteur métallique (211) et le revêtement en matériau repoussant le vecteur ;
(c) à déposer une deuxième couche par-dessus la première couche, la deuxième couche étant une autre couche parmi la couche de réflecteur métallique et le revêtement en matériau repoussant le vecteur ; et,
(d) à séparer la pluralité de paillettes par rapport au substrat ;
où le substrat est un substrat non plat présentant des sillons (703) formant un cadre sur la surface de celui-ci et une zone concave ou convexe à l'intérieur du cadre.

10. Un procédé tel que défini dans la revendication 9, où le substrat est un substrat non plat présentant des sillons (703) formant un cadre sur la surface de celui-ci et un symbole en relief à l'intérieur du cadre.

11. Un procédé tel que défini dans la revendication 9, comprenant en outre une étape consistant à déposer une couche de diélectrique, entre les étapes (b) et (c).

12. Un procédé tel que défini dans la revendication 9, comprenant en outre une étape consistant à déposer une couche d'absorbeur, après l'étape (b) et avant l'étape (c).

13. Un procédé tel que défini dans la revendication 9, comprenant en outre une étape consistant à déposer une couche démoulante sur le substrat avant l'étape (a).

14. Une paillette telle que définie dans la revendication 1 où le matériau repoussant le vecteur est un matériau hydrophobe et où le deuxième côté de la paillette n'est pas hydrophobe.
